# EUROPÄISCHE PATENTSCHRIFT

(11) **EP 1 971 012 B1**
(45) Veröffentlichungstag und Bekanntmachung des Hinweises auf die Patenterteilung: **04.05.2011**
(21) Anmeldenummer: 07004988.7
(22) Anmeldetag: 10.03.2007
(51) Int. Cl.: H02K 5/15, H02K 5/22

(54) **Klemmbrett sowie elektrische Maschine**
Terminal board and electric machine
Panneau de raccordement et machine électrique

(43) Veröffentlichungstag der Anmeldung: 17.09.2008
(73) Patentinhaber: ABM Greiffenberger Antriebstechnik GmbH, 95615 Marktredwitz (DE)
(72) Erfinder: Rögner, Werner, 95659 Arzberg (DE); Hille, Ralph, 95680 Bad Alexandersbad (DE); Zimmerer, Gerald, 95679 Waldershof (DE)
(74) Vertreter: FDST Patentanwälte

(56) Entgegenhaltungen:
- EP-A- 1 315 269
- DE-A1- 4 342 761
- FR-A- 1 119 947
- FR-A1- 2 801 442

## Beschreibung

Die Erfindung betrifft ein Klemmbrett für eine gehäuselose elektrische Maschine, insbesondere für einen gehäuselosen Asynchronmotor, mit einem sich in einer Längsrichtung und in einer Querrichtung erstreckenden elektrisch isolierenden Grundkörper, der Mittel zur Befestigung an der elektrischen Maschine und Mittel zur Anbringung einer Anzahl von Anschlussbolzen umfasst. Die Erfindung betrifft weiter eine elektrische Maschine, insbesondere einen Asynchronmotor, mit einem sich entlang einer Längsrichtung erstreckenden zylinderförmigen Ständer, mit einem beweglich gelagerten Läufer im Inneren des Ständers und mit einer mit dem Läufer verbundenen, sich in Längsrichtung erstreckenden Antriebswelle, wobei die Antriebswelle in beidendseitig angeordneten Lagerschilden gelagert ist.

Ein Klemmbrett der eingangs genannten Art wird zum Anschluss der Versorgungsleitungen an einer elektrischen Maschine eingesetzt. Hierzu weist das Klemmbrett einen elektrisch isolierenden Grundkörper beispielsweise aus Keramik oder einem entsprechenden Duroplasten auf, der an der elektrischen Maschine befestigbar ist. In dem Grundkörper ist weiter eine Anzahl von metallischen Anschlussbolzen gehalten, wobei die Anschlussbolzen entweder in den Grundkörper bereits eingegossen oder in bzw. an diesem durch Form- oder Kraftschluss gehalten werden. Über die Anschlussbolzen werden die motorseitigen Anschlussleitungen mit den Versorgungsleitungen elektrisch kontaktiert. Üblicherweise sind hierzu sowohl die motorseitigen Anschlussleitungen als auch die Versorgungsleitungen jeweils mittels Kabelschuhen an dem entsprechenden Anschlussbolzen befestigt. Die elektrische Kontaktierung und Befestigung geschieht dabei beispielsweise mittels Beilagescheiben und Überwurfmuttern, die unter Einklemmung der Kabelschuhe an einem Gewinde des jeweiligen Anschlussbolzens gegeneinander verkontert werden.

Eine elektrische Maschine der eingangs genannten Art, die ohne ein Gehäuse auskommt, da der Ständer zwischen den Lagerschilden gehalten ist, weist einen zylinderförmigen Ständer auf, in dessen Inneren ein Läufer drehbar gelagert ist. Zur drehbaren Lagerung ist der Läufer mit einer den Ständer axial durchsetzenden Antriebswelle verbunden, die an beidendseitig des Ständers angeordneten Lagerschilden gelagert ist. Für einen motorischen oder generatorischen Betrieb der elektrischen Maschine weist diese am Läufer und/oder am Ständer eine Anzahl von Wicklungssträngen auf, die mit motorseitigen Anschlussleitungen elektrisch kontaktiert sind. Hierzu werden die motorseitigen Anschlussleitungen an die Anschlussbolzen eines vorgeschriebenen Klemmbretts geführt, und dort mit den externen Versorgungsleitungen elektrisch verbunden. Das Klemmbrett ist hierbei für eine sichere elektrische Kontaktierung am Betriebsort an einem der beiden Lagerschilde befestigt. Der Ständer umfasst in der Regel drei Wicklungsstränge, die in Nuten eines zylinderförmigen Blechpakets geführt sind.

Im Falle eines elektrischen Synchronmotors sind für einen Innenläufer über dessen Umfang verteilt eine Anzahl von Magnetpolen angeordnet, die in einem über eine entsprechende Bestromung der Wicklungsstränge des Ständers erzeugten magnetischen Wanderfeld synchron rotieren. Im Falle eines Asynchronmotors sind auf dem Läufer eine Anzahl von in der Regel kurz geschlossenen Wicklungssträngen oder Stäben angeordnet, wobei sich der Läufer in Folge einer Induktion in den Wicklungssträngen oder Stäben gegenüber dem magnetischen Wanderfeld des Ständers verlangsamt, d. h. asynchron dreht. Insbesondere die Ausgestaltung als Asynchronmotor wird häufig für elektrische Antriebe eingesetzt, da diese Ausgestaltung kostengünstig und robust ist.

Die Ansteuerung sowohl eines Synchron- als auch eines Asynchronmotors geschieht in der Regel durch Drehstrom oder durch eine mittels eines Umrichters für jeden Wicklungsstrang in der Phase angepasste Wechselbestromung.

Eine elektrische Maschine, wobei der Ständer und der Läufer in einem Gehäuse angeordnet sind, und wobei ein Klemmbrett zur elektrischen Kontaktierung der motorseitigen Anschlussleitungen mit externen Versorgungsleitungen vorgesehen ist, findet sich beispielsweise in der DE 102 27 725 A1, FR 1119947 und EP 1315269 A1.

Eine elektrische Maschine der vorbeschriebenen Art und insbesondere ein Asynchronmotor wird häufig zum Antrieb eines so genannten Flurförderfahrzeugs eingesetzt. Dabei ist die Antriebswelle der elektrischen Maschine entweder über ein Flachgetriebe oder über ein Kegelradgetriebe mit einem Laufrad des Flurförderfahrzeugs verbunden. Unter einem Flurförderfahrzeug werden dabei Fahrzeuge zur Aufnahme, Beförderung und Ablage von Lasten, insbesondere von Paletten oder dergleichen verstanden, wie sie beispielsweise in der Lagerhaltung eingesetzt werden. Ein Flurförderfahrzeug ist beispielsweise ein so genannter Kommisionierer, ein Gabelhubwagen oder ein Hubstapler. Die beschriebene elektrische Maschine wird aber auch als Antrieb für ein so genanntes Aufsitzreinigungsfahrzeug oder dergleichen eingesetzt.

Zum Einbau der elektrischen Maschine in die Antriebseinheit insbesondere eines Flurförderfahrzeugs steht in der Regel nur ein begrenzter Einbauraum zur Verfügung. Da die Antriebseinheit eines Flurförderfahrzeugs zu einer Lenkung verschwenkbar gelagert ist, darf insbesondere die elektrische Maschine gewisse Außenmaße nicht überschreiten.

Aufgabe der Erfindung ist es, ein Klemmbrett für eine gehäuselose elektrische Maschine anzugeben, mit dem sich ein möglichst geringes Einbaumaß erzielen lässt. Weiter ist es Aufgabe der Erfindung, eine elektrische Maschine mit einem Klemmbrett anzugeben, die ein möglichst geringes Einbaumaß aufweist. Die erste Aufgabe wird gelöst durch ein erfindungsgemäßes Klemmbrett nach Anspruch 1.

Vorteilhafte Ausgestaltungsformen der Erfindung sind Gegenstand der abhängigen Ansprüche.

Die Erfindung geht dabei von der Überlegung aus, dass ein Klemmbrett gemäß Stand der Technik, welches einem Lagerschild aufmontiert wird, den Vorteil einer leichteren Zugänglichkeit zum Anschluss der externen Versorgungsleitungen am Betriebsort bietet. Andererseits befindet sich das Klemmbrett bei einer derartigen Anordnung in einer exponierten Lage, die es beim Einbau der elektrischen Maschine einer erhöhten Bruchgefahr aussetzt.

Weiter die geht die Erfindung von der Überlegung aus, dass ein zur Befestigung an einem Lagerschild der elektrischen Maschine ausgestaltetes Klemmbrett nach dessen Einbau zwangsläufig den Einbauraum und insbesondere den Hüllkreis der elektrischen Maschine vergrößert.

Schließlich geht die Erfindung von der Gegebenheit aus, dass die Lagerschilde einer gehäuselosen elektrischen Maschine aufgrund ihrer Nutzung zum Einbau am Betriebsort größere Außenabmessungen als der Ständer aufweisen. Um eine Verschraubung der elektrischen Maschine zu ermöglichen, sind die Lagerschilde über die Außenabmessungen des Ständers hinausgezogen. Die Erfindung erkennt nun, dass sich aufgrund dieser Ausgestaltung ein Einbauraum entlang des zylinderförmigen Ständers befindet, in den ein Klemmbrett eingesetzt werden kann, ohne dass es den Hüllkreis der elektrischen Maschine wesentlich vergrößert. Dies gelingt dadurch, dass die Auflagefläche des Grundkörpers in Querrichtung konkav gekrümmt und in Längsrichtung im Wesentlichen geradlinig ist. Auf diese Weise kann das Klemmbrett in Längsrichtung des zylinderförmigen Ständers diesem aufgelegt werden, wobei ein bislang ungenutzter Einbauraum an der gehäuselosen elektrischen Maschine genutzt wird. Die Verwendung des angegebenen Klemmbretts, welches in Längsrichtung am Ständer der elektrischen Maschine angeordnet werden kann, führt zu einer beträchtlichen Reduzierung der Einbaumaße gegenüber der bisher praktizierten Anschlussart.

Der Grundkörper kann an sich aus einem beliebigen geeigneten isolierenden Material hergestellt sein. Beispielhaft sei eine Keramik oder eine Duroplast genannt. Insbesondere wird ein Duroplast eingesetzt, der feuerfest ist und somit länderspezifischen Sicherheitsanforderungen für elektrische Maschinen entspricht.

In einer vorteilhaften Ausgestaltung weist die konkave Krümmung der Auflagefläche unterschiedliche Krümmungsradien auf. Diese Ausgestaltung bietet den großen Vorteil, dass ein und dasselbe Klemmbrett für elektrische Maschinen eingesetzt werden kann, deren Ständer einen unterschiedlichen Umfang aufweisen. Somit braucht nicht für jede elektrische Maschine ein separates Klemmbrett hergestellt werden, so dass die Typenvielfalt und damit die Kosten bei der Herstellung reduziert sind.

Zur Befestigung des Klemmbretts an der elektrischen Maschine kann eine Verklebung, eine Verpressung oder ein Verschraubung vorgesehen sein. Erfindungsgemäß ist als Mittel zur Befestigung an der elektrischen Maschine in den Grundkörper eine in Längsrichtung verlaufende Durchgangsbohrung eingebracht. Diese Durchgangsbohrung erlaubt ein Aufschieben des Klemmbretts auf eine der Zylinderschrauben, mit denen im Falle einer gehäuselosen elektrischen Maschine die beiden den Ständer umfassenden Lagerschilde gegeneinander verschraubt sind. In besonders einfacher Art und Weise und ohne das Vorsehen zusätzlicher Befestigungsmittel kann somit das Klemmbrett bei der Montage der gehäuselosen elektrischen Maschine zunächst einer in einem Lagerschild angeordneten freien Zylinderschraube aufgesetzt und gegenüber dem Ständer an die gewünschte Endposition verschoben werden. Anschließend wird das weitere Lagerschild aufgesetzt und über die Zylinderschrauben fest verbunden. Da in der endmontierten Position die Zylinderschraube beidendseitig fixiert ist, wird bei einer geeigneten Dimensionierung des Grundkörpers das Klemmbrett in der Endlage unter einer Vorspannung von der in Längsrichtung verlaufenden Zylinderschraube gegen den Umfang des zylinderförmigen Ständers festgehalten.

Um eine zusätzliche Verschiebesicherheit des Klemmbretts gegenüber der Zylinderschraube zu erzielen, ist in einer bevorzugten Ausgestaltung in den Grundkörper eine auf die Durchgangsbohrung stoßende Gewindebohrung eingebracht. In diese Gewindebohrung kann in der Endmontageposition des Klemmbrettes eine Klemmschraube eingedreht werden, die mit ihrem Schaft gegen die die Durchgangsbohrung durchstoßende Zylinderschraube wirkt.

In einer weiter bevorzugten Ausgestaltung ist die der Auflagefläche abgewandte obere Begrenzungsfläche des Grundkörpers in Querrichtung konvex gekrümmt und in Längsrichtung im Wesentlichen eben ausgebildet. Durch diese Ausgestaltung wird eine weitere Verringerung der Außenabmessung einer mit dem Klemmbrett versehenen elektrischen Maschine bewirkt. Durch die Abschrägung werden insbesondere bezüglich der elektrischen Maschine radialabstehende Kanten vermieden.

Zur Befestigung der Anschlussbolzen können diese entweder in den Grundkörper eingegossen, eingeklebt oder mit diesem fest verschraubt sein. In einer zweckmäßigen Weiterbildung ist zur Anbringung des oder jeden Anschlussbolzens eine kraft- und/oder formschlüssige Verdrehsicherung vorgesehen. Hierdurch wird eine sichere Befestigung des Anschlussbolzens erreicht. Insbesondere erlaubt die Verdrehsicherung eine problemlose Anbringung eines Kabelschuhs an dem Anschlussbolzen. Der Formschluss kann beispielsweise über eine Polygon-Verbindung hergestellt werden. Aber auch eine Verschraubung oder Verklemmung ist zur Ausbildung einer Verdrehsicherung möglich.

In einer besonders vorteilhaften Ausgestaltung ist zur drehsicheren Aufnahme des oder jeden Anschlussbolzens in die Auflagefläche jeweils eine Mehrkant-Ausnehmung eingebracht, die im Grundkörper in Richtung zur oberen Begrenzungsfläche, einen Anschlag bildend, in eine durchgehende Zylinderbohrung übergeht. Bei dieser Ausgestaltung wird ein am Schaftende mit einem zur Mehrkant-Ausnehmung korrespondierenden Mehreck versehender Anschlussbolzen von unten durch die entsprechende Aufnehmung der Auflagefläche durch die durchgehenden Zylinderbohrung gesteckt. Der zylinderförmige Schaft des Anschlussbolzen ragt dann aus der oberen Begrenzungsfläche des Grundkörpers heraus, während der Anschlussbolzen selbst mit seinem Mehreck in der Mehrkant-Ausnehmung festgehalten ist. In der Endmontageposition des Klemmbretts ist ein Herausfallen des Anschlussbolzens nicht mehr möglich, da die Auflagefläche des Klemmbretts dem Ständer aufliegt. Nach oben ist der Anschlussbolzen durch sein Mehreck gesichert, welcher im Grundkörper am durch den Übergang der Mehrkant-Ausnehmung in die zylinderförmige Durchgangsbohrung gebildeten Anschlag anliegt.

Weiter bevorzugt ist die Auflagefläche in Querrichtung durch eine Anlageflanke verlängert. Hierdurch wird die dem zylinderförmigen Ständer aufliegende Auflagefläche vergrößert, so dass eine sichere und stabile Haltung gegeben ist. Die Anlageflanke kann aber auch zur Anbringung eines Typenschildes etc. verwendet werden.

Weiter von Vorteil ist es, wenn die den Grundkörper in Querrichtung seitlich begrenzenden Begrenzungsflächen schräg nach außen abfallend ausgebildet sind. Durch diese Maßnahme werden die Außenabmessungen insbesondere in radialer Richtung an der elektrischen Maschine weiter verringert. Zudem wird hierdurch die Bruchgefahr des Klemmbretts während der Montage der elektrischen Maschine verringert, da weiter vorstehende Kanten geglättet sind.

In einer weiter bevorzugten Ausgestaltung ist das Klemmbrett aus einer Anzahl von insbesondere gleichartigen Einzelmodulen in Längsrichtung zusammensetzbar ausgebildet. Eine derartige Ausgestaltung bietet den Vorteil, dass das Klemmbrett an die Belange der elektrischen Maschine anpassbar ist. So kann beispielsweise mit einer unterschiedlichen Anzahl von Einzelmodulen eine unterschiedliche Anzahl von Anschlussklemmen realisiert werden. Auch ist auf diese Weise eine Anpassung der Länge des Klemmbretts insgesamt ermöglicht.

In einer ersten Variante sind die Einzelmodule unterschiedlich ausgestaltet. Beispielsweise kann ein erstes Einzelmodul zur Aufnahme eines Anschlussbolzens und ein weiteres Einzelmodul lediglich als Abstandhalter ausgebildet sein. Aus wirtschaftlicher Sicht ist es günstig, die Einzelmodule gemäß einer zweiten Variante gleichartig auszugestalten. In diesem Fall wird es möglich, mit einer Anzahl identischer Einzelmodule in der Länge und in der Anzahl der Anschlussbolzen variierende Klemmbretter zur realisieren. Zur Fertigung ist nur eine einzige Form vorzuhalten.

Die Fügbarkeit entlang der Längsrichtung ist zweckmäßig, da in dieser Richtung die Länge des Klemmbretts für unterschiedliche elektrische Maschinen variieren kann. Das Klemmbrett ist - wie bereits erwähnt -zum Einbau entlang der Längsrichtung des zylinderförmigen Ständers einer elektrischen Maschiene ausgebildet.

Das Zusammenfügen der Einzelmodule kann grundsätzlich durch Form- oder Kraftschluss oder durch eine Klebung realisiert sein. Für eine fertigungstechnisch einfache Art der Zusammenfügung bietet sich insbesondere eine Steckverbindung an, die zum Stecken in Längsrichtung ausgebildet ist. Diese Variante erlaubt mit der Befestigung an der elektrischen Maschine mittels einer zylinderförmigen Durchgangsbohrung ein Zusammenfügen des Klemmbretts bei der Montage an der elektrischen Maschine. Alternativ ist auch eine formschlüssige Steckverbindung vorstellbar, die eine Fügung der Einzelmodule quer zur Längsrichtung erlaubt. In diesem Fall wird das Klemmbrett vor seiner Montage an der elektrischen Maschine zusammengesetzt.

Zweckmäßigerweise umfasst jedes Einzelmodul das Mittel zur Befestigung an der elektrischen Maschine und das Mittel zur Anbringung eines Anschlussbolzens. Mit anderen Worten stellt somit jedes Einzelmodul ein Klemmbrett im Ganzen dar, wobei jedoch lediglich ein Anschlussbolzen von dem Einzelmodul umfasst bzw. aufgenommen ist. Bei einem üblichen dreipoligen Klemmbrett werden somit drei Einzelmodule zusammengefügt.

Die zweitgenannte Aufgabe wird erfindungsgemäß gelöst durch eine elektrische Maschine gemäß Anspruch 11 .

Eine derart mit einem Klemmbrett zur elektrischen Kontaktierung der motorseitigen Anschlussleitungen mit externen Versorgungsleitungen versehene elektrische Maschine weist gegenüber einer herkömmlichen Anordnung eines Klemmbretts an einem Lagerschild einen deutlich verringerten Hüllkreis auf. Denn durch die Anordnung des Klemmbretts auf dem Umfang des zylinderförmigen Ständers wird bislang ein freistehender Einbauraum genutzt, der gegenüber dem vorstehenden Lagerschilden zurückversetzt ist.

Die beidendseitig angeordneten Lagerschilde sind, den Ständer aufnehmend, über Zylinderschrauben miteinander verschraubt. Dabei ist vorgesehen, dass das Klemmbrett in seiner in Längsrichtung verlaufenden Durchgangsbohrung von einer Zylinderschraube durchsetzt ist und mit seiner Auflagefläche an dem Ständer, insbesondere unter Vorspannung anliegt.

Zur Ausbildung einer Verschiebesicherung gegenüber der Zylinderschraube ist vorteilhafterweise das Klemmbrett gegenüber der Zylinderschraube mittels einer in die Gewindebohrung gegen die Zylinderschraube eingeschraubten Klemmschraube gehalten.

Die weiteren bezüglich des Klemmbretts beschriebenen Vorteile lassen sich sinngemäß auf die elektrische Maschine übertragen.

Ausführungsbeispiele der Erfindung sind in einer Zeichnung näher erläutert. Dabei zeigen:
- Fig. 1 A: in einer perspektivischen Darstellung ein Klemmbrett mit einer gekrümmten Auflagefläche,
- Fig. 1B: in einer weiteren perspektivischen Darstellung das Klemmbrett gemäß Fig. 1A mit Blick auf die gekrümmte Auflagefläche,
- Fig. 1C: das Klemmbrett gemäß Fig. 1A in einem Schnitt quer zur Längsrichtung,
- Fig. 1D: in einer teilweise geschnittenen Darstellung eine Aufsicht auf die Seite des Klemmbretts gemäß Fig. 1A zur Verdeutlichung der Krümmungsradien der Auflagefläche,
- Fig. 2: in einer weiteren perspektivischen Darstellung das Klemmbrett gemäß Fig. 1A mit eingesetzten Anschlussbolzen und daran befestigten Kabelschuhen,
- Fig. 3: in einer perspektivischen Darstellung einen Asynchronmotor mit abgenommenen vorderen Lagerschild und einem in Längsrichtung dem Ständer aufgesetztem Klemmbrett,
- Fig. 4: in einer teilweise geschnittenen Darstellung eine Aufsicht auf die Asynchronmaschine gemäß Fig. 3 mit einem auf einem Lagerschild angeordneten Klemmbrett und mit einem in Längsrichtung dem Ständer aufgesetzten Klemmbrett,
- Fig. 5A: in einer perspektivischen Darstellung ein alternatives Klemmbrett mit einer gekrümmten Auflagefläche, wobei das Klemmbrett aus einer Anzahl von Einzelmodulen zusammenfügbar ist,
- Fig. 5B: in einer weiteren perspektivischen Darstellung ein leicht abgewandeltes Einzelmodul des Klemmbretts gemäß Fig. 5A aus verschiedenen Perspektiven, und
- Fig. 5C: das Einzelmodul gemäß Fig. 5B in einem Schnitt quer zur Längsrichtung.

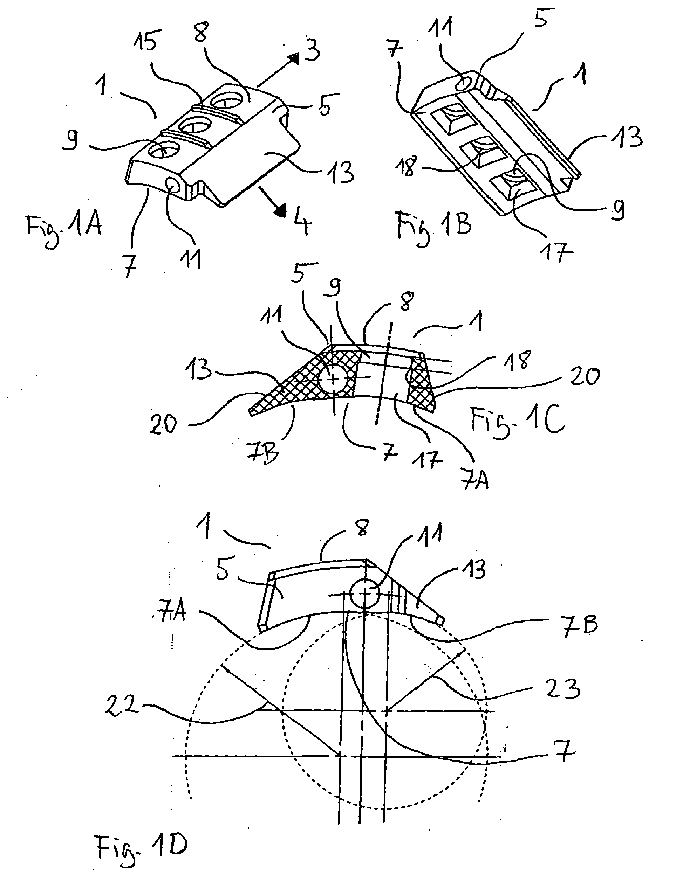

In Fig. 1A ist in einer perspektivischen Darstellung ein Klemmbrett 1 zum Aufsetzen auf einen zylinderförmigen Ständer einer gehäuselosen elektrischen Maschine gezeigt. Das Klemmbrett 1 umfasst hierbei ein sich im Wesentlichen in einer Längsrichtung 3 und in einer Querrichtung 4 erstreckenden Grundkörper. Der Grundkörper 5 ist im Ausführungsbeispiel aus einem elektrisch isolierenden und feuerfestem Duroplasten gefertigt.

Der Grundkörper 5 weist auf seiner Unterseite eine in Querrichtung 4 konkav gekrümmte und in Längsrichtung 3 im Wesentlichen geradlinig verlaufende Auflagefläche 7 auf. Mit dieser Auflagefläche 7 ist das Klemmbrett 1 in Längsrichtung dem zylinderförmigen Ständer einer elektrischen Maschine aufsetzbar. Die der Auflagefläche 7 gegenüberliegende obere Begrenzungsfläche 8 des Grundkörpers 5 ist in Querrichtung 4 konvex und in Längsrichtung 3 wiederum im Wesentlichen geradlinig verlaufend ausgebildet.

Senkrecht zur Längsrichtung 3 wird der Grundkörper 5 von drei Zylinderbohrungen 9 durchstoßen, die zur Aufnahme von metallischen Anschlussbolzen ausgebildet sind. In den Grundkörper 5 ist weiter eine diesen in Längsrichtung 3 durchstoßende Durchgangsbohrung 11 eingebracht. Des weiteren weist der Grundkörper 5 eine sich in Querrichtung erstreckende Anlageflanke 13 zur Vergrößerung der Auflagefläche 7 auf. Zwischen den Zylinderbohrungen 9 sind auf der oberen Begrenzungsfläche 8 jeweils Stege 15 ausgebildet.

In Fig. 1B ist das Klemmbrett 1 wiederum perspektivisch mit einer Sicht auf die Auflagefläche 7 dargestellt. Man erkennt die den Grundkörper 5 in Längsrichtung durchstoßende Durchgangsbohrung 11 sowie die in Querrichtung verlängerte Anlageflanke 13.

In die Auflagefläche 7 sind von unten drei Mehrkant-Ausnehmungen 17 eingebracht, die über einen Anschlag 18 in die Zylinderbohrungen 9 übergehen. Mehrkant-Ausnehmung 17, Anschlag 18 und Zylinderbohrung 9 bilden jeweils ein Mittel zur drehfesten Aufnahme eines Anschlussbolzens. Dabei wird der Anschlussbolzen von unten gegen die Auflagefläche 7 eingeführt, bis ein mit der Mehrkantausnehmung 17 an seinem Schaftende angebrachtes Mehreck gegen den Anschlag 18 gedrückt ist.

Fig. 1C zeigt einen Schnitt durch das Klemmbrett 1 quer zur Längsrichtung 3. Dabei verläuft der Schnitt durch eine der Zylinderbohrungen 9.

Man erkennt aus diesem Schnitt zunächst die in Querrichtung konkav gekrümmte Auflagefläche 7, die aus zwei mit unterschiedlichen Krümmungsradien gekrümmten Teilflächen 7 A und 7 B zusammengesetzt ist. Weiter wird deutlich die Mehrkant-Ausnehmung 17 ersichtlich, die über einen Anschlag 18 in die Zylinderbohrung 9 nach oben in die obere Begrenzungsfläche 8 übergeht. Gut erkennbar ist weiter die den Grundkörper 5 durchsetzende Durchgangsbohrung 11.

In der Zeichnung links ist ferner die Anlageflanke 13 erkennbar, die von einer schrägen seitlichen Begrenzungsfläche 20 begrenzt ist. Ihr gegenüberliegend wird der Grundkörper 5 ebenfalls durch eine schräge seitliche Begrenzungsfläche 20 abgeschlossen.

In Fig. 1D ist das Klemmbrett 1 in einer teilweise geschnittenen Darstellung in einer Aufsicht auf die Seitenfläche dargestellt. Gegenüber dem Schnitt gemäß Fig. 1C ist in Fig. 1D das Klemmbrett 1 um 180° gedreht.

Man erkennt wiederum die Durchgangsbohrung 11 sowie die Anlageflanke 13 und die obere Begrenzungsfläche 8. Deutlich wird nun sichtbar, dass die Auflagefläche 7 des Grundkörpers 5 sich aus zwei Teilflächen 7 A und 7 B zusammensetzt, die unterschiedliche Krümmungsradien aufweisen. So ist die Teilfläche 7 A durch einen Krümmungsradius 22 gegeben, der gegenüber dem Krümmungsradius 23 der weiteren Teilfäche 7 B vergrößert ist. Durch die Ausgestaltung der Auflagefläche 7 aus zwei Teilfächen 7 A und 7 B mit unterschiedlichen Krümmungsradien 22 bzw. 23 wird es möglich, das Klemmbrett 1 auf zylinderförmige Ständer von elektrischen Maschinen unterschiedlichen Umfangs aufzusetzen.

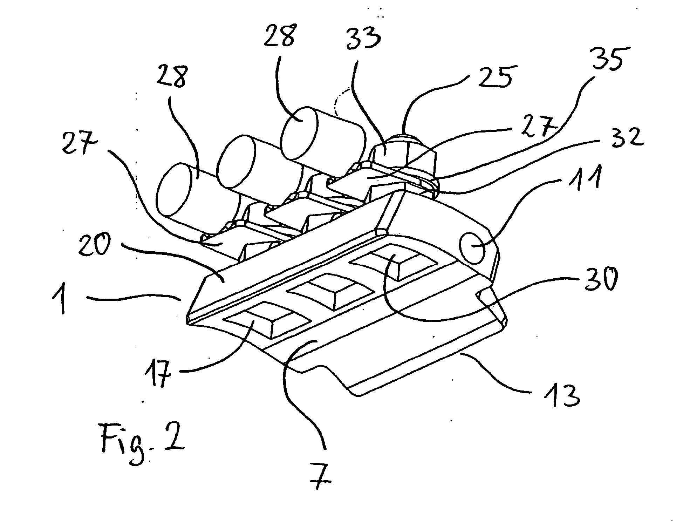

In Fig. 2 ist das in den Figuren 1 gezeigte Klemmbrett 1 noch einmal perspektivisch dargestellt. Dabei sind in die Mehrkantausnehmungen 17 von unten jeweils Anschlussbolzen 25 eingesteckt. Auf jedem Anschlussbolzen 25 ist zum Anschluss von elektrischen Versorgungsleitungen ein Kabelschuh 27 aufgesetzt, der zur Verbindung mit einer Kabellitze jeweils eine Klemmverbindung 28 aufweiset. Die den Anschlussbolzen 25 aufgesetzten Kabelschuhe 27 sind jeweils mittels einer ersten Mutter 32 und einer Kontermutter 33 befestigt. Für eine sichere elektrische Kontaktierung zwischen dem Kabelschuh 27 und dem Anschlussbolzen 25 ist ferner eine Beilagscheibe 35 eingebracht. Von den Anschlussbolzen 25 ist ferner jeweils das am Schaftende angeordnete Mehreck 30 einsehbar, welches drehfest in der Mehrkantausnehmung 17 sitzt. Weiter wird die Klemmverbindung 28 jedes Kabelschuhs 27 deutlich sichtbar. Der entsprechende zylinderförmige Teil ist zur Herstellung einer Crimp-Verbindung des Kabelschuhs 27 mit den Litzen oder Drähten der Versorgungsleitungen bzw. der Anschlussleitungen ausgebildet. Zur Erhöhung der elektrischen Sicherheit ist die Klemmverbindung 28 jeweils mit einem Schutzschlauch gegen einen Kontakt bei Berührung isoliert.

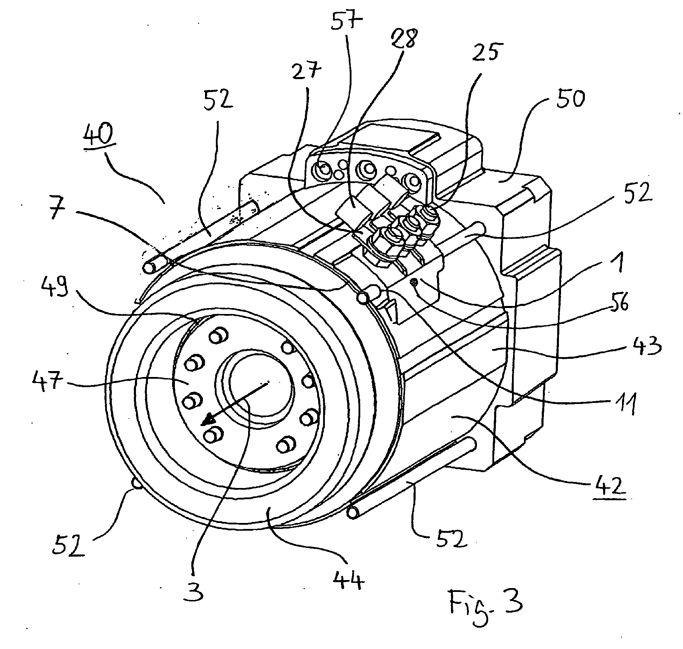

In Fig. 3 ist wiederum in einer perspektivischen Darstellung ein gehäuseloser Asynchronmotor 40 gezeigt. Von dem Asynchronmotor 40 wird der sich in Längsrichtung 3 erstreckende zylinderförmige Ständer 42 ersichtlich, der im Wesentlichen aus einem Ständerblechpaket 43 und einer daran angeordneten Ständerwicklung 44 besteht. Von der Ständerwicklung 40 ist lediglich der vordere Teil erkennbar. Im Inneren des Ständers 42 ist der Läufer 47 des Asynchronmotors 40 erkennbar, der sich gegenüber dem Ständer 42, durch einen Luftspalt 49 beabstandet, drehen kann.

Der Ständer 42 ist in einem Lagerschild 50 gehalten, in welchem vier Zylinderschrauben 52 aufgenommen sind. Das zur Aufnahme des Ständers 42 und zur Lagerung der den Läufer 47 tragenden Antriebswelle weiter notwendige vordere Lagerschild ist zur besseren Übersichtlichkeit entfernt.

In Längsrichtung des zylinderförmigen Ständers 42 bzw. auf dem Ständerblechpaket 43 ist mit seiner konkav gekrümmten Auflagefläche 7 ein Klemmbrett 1 gemäß Fig. 2 aufgesetzt. Dabei ist das Klemmbrett 1 mit seiner in Längsrichtung 3 verlaufenden Durchgangsbohrung 11 einer Zylinderschraube 52 aufgeschoben. Ist diese Zylinderschraube 52 im montierten Zustand des Asynchronmotors 42 auch am nicht eingezeichneten vorderen Lagerschild fixiert, so wird das Klemmbrett 1 mit seiner Auflagefläche 7 gegen das Ständerblechpaket 43 gepresst. Bereits durch diese Maßnahme wird an sich eine sichere Befestigung des Klemmbretts 1 erzielt. Um jedoch ein Verschieben des Klemmbretts 1 entlang der Zylinderschraube 52 sicher zu verhindern, ist in das Klemmbrett 1 eine Gewindebohrung eingebracht, in die eine Klemmschraube 56 gegen die durchsetzende Zylinderschraube 52 geschraubt ist.

Zum Anschluss elektrischer Versorgungsleitungen sind wiederum die bereits aus Fig. 2 bekannten Kabelschuhe 27 den jeweiligen Anschlussbolzen 25 aufgesetzt. An den Kabelschuhen 27 sind jeweils Klemmverbindungen 28 angeordnet.

Man erkennt aus Fig. 3 deutlich, dass durch die Verwendung des Klemmbretts 1 welches mit seiner in Querrichtung konkav gekrümmten Auflagefläche 7 längs dem Ständerblechpaktet aufsetzt ist, ein Einbauraum des Asynchronmotors 40 genutzt wird, der gegenüber dem Lagerschild 50 radial nach innen versetzt ist. Aus diesem Grund führt ein derartiges Aufbringen des Klemmbretts 1 lediglich zu einer geringen Vergrößerung der Einbaumaße und insbesondere des Hüllradius oder des Hüllkreises des Asynchronmotors 40.

Zu einer vereinfachten Darstellung ist an den Anschlussbolzen 25 jeweils nur ein Kabelschuh 27 eingezeichnet. Über die Klemmverbindung 28 wird insbesondere jeweils eine motorseitige Anschlussleitung elektrisch kontaktiert, die aus einer der Öffnungen 57 geführt ist. Der gezeigte Asynchronmotor 40 weist insofern drei Wicklungsstränge auf, die über Drehstrom mit elektrischer Leistung versorgt werden. Die Wicklungsstränge sind dabei in Sternschaltung geschaltet.

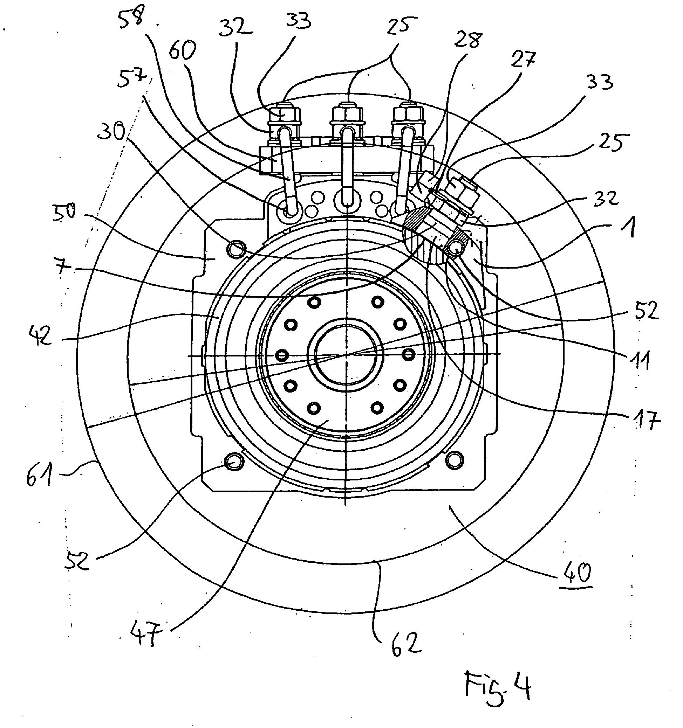

In Fig. 4 ist der Asynchronmotor 40 gemäß Fig. 3 in einer teilweise geschnittenen Aufsicht von vorne gezeigt. Man erkennt den Läufer 47 sowie den ihn umgebenden Ständer 42. Auch hier ist das vordere Lagerschild nicht dargestellt. Man erkennt nun, dass das hintere Lagerschild 50 im Wesentlichen rechteckig geformt ist, wobei an vier Eckpunkten jeweils eine Zylinderschraube das Lagerschild 50 durchsetzt.

Zum Vergleich einer bisherigen mit einer vorbeschriebenen Anordnung eines Klemmbretts ist auf dem Lagerschild 50 des Asynchronmotors 40 ein Klemmbrett 60 in einer Ausgestaltung gemäß Stand der Technik aufgesetzt. Auch dieses Klemmbrett 60 umfasst Anschlussbolzen 25, wobei über eine erste Mutter 32 und eine Kontermutter 33 ein Kabelschuh eingeklemmt und somit die motorseitigen Anschlussleitungen 58 kontaktiert sind.

Weiter ist ein Klemmbrett 1 eingezeichnet, welches mit seiner Auflagefläche 7 dem zylinderförmigen Ständer 42 aufgesetzt ist. Von dem Klemmbrett 1 wird in der Teilschnittansicht die Durchgangsbohrung 11 ersichtlich, durch die die Zylinderschraube 52 geführt ist. Weiter ist die Mehrkantausnehmung 17 erkennbar, in welcher das Mehreck 30 des Anschlussbolzen 25 gesteckt ist. Auf dem Anschlussbolzen 25 sind mittels einer ersten Mutter 32 und einer Kontermutter 33 zwei Kabelschuhe 27 mit jeweils daran befestigter Klemmverbindung 28 angeordnet. Die beiden Kabelschuhe 27 dienen dabei zum Anschluss der motorseitigen Anschlussleitungen 58 bzw. der externen Versorgungsleitungen.

Zur Verdeutlichung der Einbauunterschiede ist in dieser Ansicht ein erster Hüllradius 61 der bekannten und ein zweiter Hüllradius 62 der vorgeschriebenen Klemmbrettanordnung zugeordnet. Man erkennt deutlich die drastische Verringerung des zweiten Hüllradius 62 gegenüber dem ersten Hüllradius 61. Der mit einem Klemmbrett 1 ausgestattete Asynchronmotor 45 ist somit prädestiniert für einen Einsatz in einem vorgegebenen Einbauraum. Zudem wird aus Fig. 4 noch ersichtlich, dass das Klemmbrett 1 gegenüber dem Klemmbrett 60 in einer deutlich weniger exponierten Lage angeordnet ist. Hierdurch wird insbesondere eine Bruchgefahr des Klemmbretts 1 vermieden, die gerade auch deswegen gegeben ist, da feuerfeste Duroplasten eine gewisse Sprödigkeit aufweisen.

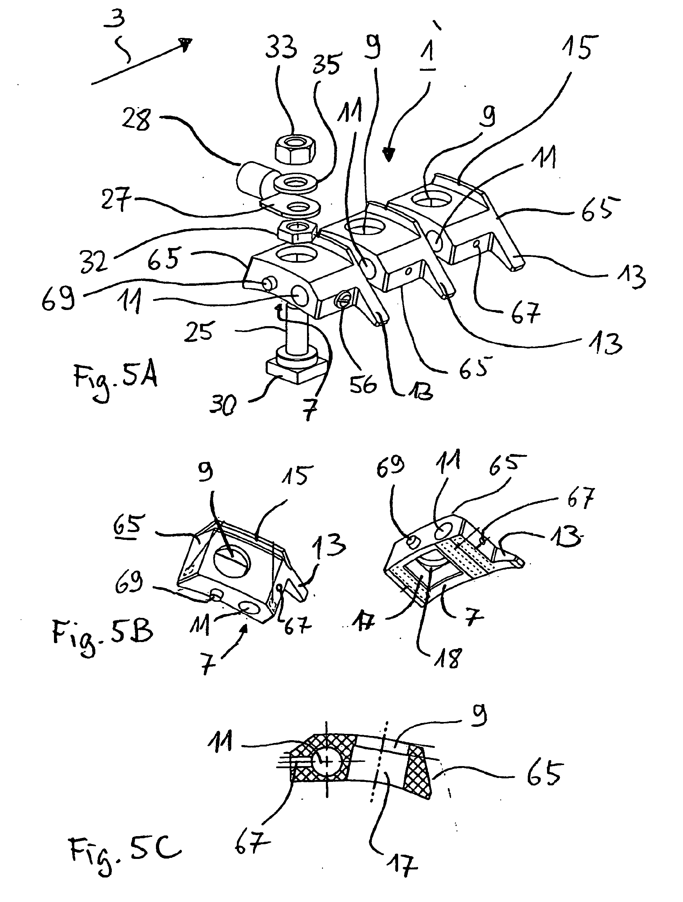

In Fig. 5A ist perspektivisch ein alternatives Klemmbrett 1' mit einer gekrümmten Auflagefläche 7 dargestellt, welches aus Einzelmodulen 65 zusammensetzbar ist. Jedes der Einzelmodule 65 umfasst dabei eine Zylinderbohrung 9 zur Aufnahme eines Anschlussbolzens 25. Weiter weist jedes Einzelmodul 65 zur Befestigung an einer elektrischen Maschine eine in Längsrichtung 3 verlaufende Durchgangsbohrung 11 auf. Zur Befestigung jedes Einzelmoduls 65 an einer durchgehenden Zylinderschraube der elektrischen Maschine ist des Weiteren jeweils eine auf die Durchgangsbohrung 11 stoßende Gewindebohrung 67 eingebracht, über die eine Klemmung des Einzelmoduls 65 gegenüber derdurchgehenden Zylinderschraube mittels einer eingeschraubten Klemmschraube 56 ermöglicht ist. Jedes der Einzelmodule 65 umfasst weiter einen die Anschlussbolzen 25 gegeneinander trennenden Steg 15 sowie eine verlängerte Anlageflanke 13 zur Verbesserung der Auflage.

Für das in der Darstellung vorderste Einzelmodul 65 ist die Einbringung eines Anschlussbolzens 25 sowie der Anschluss an eine externe Versorgungsleitung dargestellt. Man erkennt dabei den zylinderförmigen Anschlussbolzen 25, der an seinem unteren Ende ein Mehreck 30 aufweist. Zur Befestigung wird der Anschlussbolzen 25 von unten gegen die gekrümmte Auflagefläche 7 in Richtung der Zylinderbohrung 9 gesteckt. Dabei gerät sein Mehreck 30 in Formschluss mit einer hier nicht sichtbaren Mehrkantausnehmung in der Auflagefläche 7 und wird somit drehsicher gehalten. Zum elektrischen Anschluss ist ein Kabelschuh 27 vorgesehen, der über eine Klemmverbindung 28 mit externen Versorgungsleitungen kontaktierbar ist. Der Kabelschuh 27 wird auf dem Anschlussbolzen 25 mittels einer ersten Mutter 32 und einer Kontermutter 33 festgehalten. Dabei ist zwischen die Kontermutter 33 und dem Kabelschuh 27 eine Beilagscheibe 35 eingelegt.

Zum Zusammenfügen der Einzelmodule 65 ist eine in Längsrichtung 3 fügbare Steckverbindung vorgesehen. Diese Steckverbindung wird durch ein Steckelement 69 realisiert, was jeweils in eine Ausnehmung am gegenüberliegenden Einzelmodul 65 eingreift. Durch diese Steckverbindung ist eine Fügung des Klemmbretts 1' bei der Montage an der elektrischen Maschine ermöglicht. Die Steckverbindung wirkt sowohl als Führung bei der Montage als auch als Drehsicherung der Einzelmodule 65 gegeneinander. Denn die montierten Einzelmodule 65 sind nach der Montage zum einen über die die jeweilige Durchgangsbohrung 11 durch aufende Zylinderschraube und zum anderen durch die Steckverbindung an zwei Stellen und somit drehsicher gegeneinander fixiert.

In Fig. 5B ist ein leicht abgewandeltes Einzelmodul 65 gemäß Fig. 5A aus verschiedenen Perspektiven gezeigt. Man erkennt nun im Detail die Durchgangsbohrung 11, die Zylinderbohrung 9 sowie das Steckelement 69. Auch die verlängerte Anlageflanke 13 ist gut sichtbar. Insbesondere in der rechten Darstellung gemäß Fig. 5B wird die gekrümmte Auflagefläche 7 ersichtlich. Man erkennt die in die Auflagefläche 7 eingebrachte Mehrkantausnehmung 17 sowie den beim Übergang der Mehrkantausnehmung 17 in die Zylinderbohrung 9 gebildeten Anschlag 18. In der Mehrkantausnehmung 17 wird gegen den Anschlag 18 der aus Fig. 5A entnehmbare Anschlussbolzen 25 mit seinem Mehreck 30 gehalten. Gegenüber dem Einzelmodul 65 gemäß Fig. 5A ist der Steg 15 erhöht und in Richtung auf die Anlageflanke 11 verlängert. Hierdurch wird die Kriechstrecke zwischen den stromführenden Teilen verlängert. Zudem wird sicher vermieden, dass benachbarte Kabelschuhe seitlich aneinander anliegen können.

In Fig. 5C ist in einem Schnitt quer zur Längsrichtung 3 das Einzelmodul 65 gemäß Fig. 5B gezeigt. Es wird die Mehrkantausnehmung 17 sowie die Zylinderbohrung 9 erkennbar. Weiter wird klar die Durchgangsbohrung 11 ersichtlich, auf welche die Gewindebohrung 67 stößt.

### Bezugszeichenliste

- 1: Klemmbrett
- 1': Klemmbrett
- 3: Längsrichtung
- 4: Querrichtung
- 5: Grundkörper
- 7: Auflagefläche
- 7A: erste Teilfläche
- 7B: zweite Teilfläche
- 8: obere Begrenzungsfläche
- 9: Zylinderbohrungen
- 11: Durchgangsbohrung
- 13: Anlageflanke
- 15: Stege
- 17: Mehrkantausnehmung
- 18: Anschlag
- 20: seitliche Begrenzungsfläche
- 22: erster Krümmungsradius
- 23: zweiter Krümmungsradius
- 25: Anschlussbolzen
- 27: Kabelschuh
- 28: Klemmverbindung
- 30: Mehreck
- 32: erste Mutter
- 33: Kontermutter
- 35: Beilagscheibe
- 40: Asynchronmotor
- 42: Ständer
- 43: Ständerblechpaket
- 44: Ständerwicklung
- 47: Läufer
- 49: Luftspalt
- 50: Lagerschild
- 56: Klemmschraube
- 57: Öffnung
- 58: Anschlussleitung
- 60: Klemmbrett St. d. Technik
- 61: erster Hüllradius
- 62: zweiter Hüllradius
- 65: Einzelmodul
- 67: Gewindebohrung
- 69: Steckelement

## Patentansprüche

1. Klemmbrett (1,1') für eine gehäuselose elektrische Maschine, insbesondere für einen gehäuselosen Asynchronmotor (40), mit einem sich in einer Längsrichtung (3) und in einer Querrichtung (4) erstreckenden, elektrisch isolierenden Grundkörper (5), der Mittel zur Befestigung an der elektrischen Maschine und Mittel zur Anbringung einer Anzahl von Anschlussbolzen (25) umfasst, wobei der Grundkörper (5) eine Auflagefläche (7) aufweist, die in Querrichtung (4) konkav gekrümmt und in Längsrichtung (3) im wesentlichen geradlinig ist,
**dadurch gekennzeichnet**
**dass** als Mittel zur Befestigung an der elektrischen Maschine in den Grundkörper (5) eine in Längsrichtung (3) verlaufende Durchgangsbohrung (11) zum Aufschieben auf eine Zylinderschraube zur Verschraubung der den Ständer umfassenden Lagerschilde eingebracht ist.

2. Klemmbrett (1,1') nach Anspruch 1,
**dadurch gekennzeichnet,**
**dass** die konkave Krümmung der Auflagefläche (7) unterschiedliche Krümmungsradien (22,23) aufweist.

3. Klemmbrett (1,1') nach Anspruch 1 oder 2,
**dadurch gekennzeichnet,**
**dass** in den Grundkörper (5) eine auf die Durchgangsbohrung (11) stoßende Gewindebohrung (67) eingebracht ist.

4. Klemmbrett (1,1') nach einem der vorhergehenden Ansprüche,
**dadurch gekennzeichnet,**
**dass** die der Auflagefläche (7) abgewandte obere Begrenzungsfläche (8) des Grundkörpers (5) in Querrichtung (4) konvex gekrümmt und in Längsrichtung (3) im Wesentlichen eben ausgebildet ist.

5. Klemmbrett (1,1') nach einem der vorhergehenden Ansprüche,
**dadurch gekennzeichnet,**
**dass** zur Anbringung des oder jeden Anschlussbolzens (25) eine kraft- und/oder formschlüssige Verdrehsicherung vorgesehen ist.

6. Klemmbrett (1,1') nach Anspruch 5,
**dadurch gekennzeichnet,**
**dass** zur drehsicheren Aufnahme des oder jeden Anschlussbolzens (25) in die Auflagefläche (7) jeweils eine Mehrkant-Ausnehmung (17) eingebracht ist, die im Grundkörper (5) in Richtung zur oberen Begrenzungsfläche (8), einen Anschlag (18) bildend, in eine durchgehende Zylinderbohrung (9) übergeht.

7. Klemmbrett (1,1') nach einem der vorhergehenden Ansprüche,
**dadurch gekennzeichnet,**
**dass** die Auflagefläche (7) in Querrichtung (4) durch eine Anlageflanke (13) verlängert ist.

8. Klemmbrett (1,1') nach einem der vorhergehenden Ansprüche,
**dadurch gekennzeichnet,**
**dass** die den Grundkörper (5) in Querrichtung (4) seitlich begrenzenden Begrenzungsflächen (20) schräg nach außen abfallend ausgebildet sind.

9. Klemmbrett (1,1') nach einem der vorhergehenden Ansprüche,
**dadurch gekennzeichnet,**
**dass** es aus einer Anzahl von insbesondere gleichartigen Einzelmodulen (65) in Längsrichtung (3) zusammensetzbar ausgebildet ist.

10. Klemmbrett (1,1') nach Anspruch 9,
**dadurch gekennzeichnet,**
**dass** jedes Einzelmodul (65) das Mittel zur Befestigung an der elektrischen Maschine und das Mittel zur Anbringung eines Anschlussbolzens (25) umfasst.

11. Elektrische Maschine, insbesondere Asynchronmotor (40), mit einem sich entlang einer Längsrichtung (3) erstreckenden zylinderförmigen Ständer (42), mit einem beweglich gelagerten Läufer (47) im Inneren des Ständers (42) und mit einer mit dem Läufer (47) verbundenen, sich in Längsrichtung (3) erstreckenden Antriebswelle, wobei die Antriebswelle in beidendseitig des Ständers (42) angeordneten, sich über die Außenabmessungen des Ständers (42) hinausgezogenen Lagerschilden (50) gelagert ist,
**gekennzeichnet durch**
ein in Längsrichtung (3) dem Ständer (42) anliegendes Klemmbrett (1,1') nach einem der vorhergehenden Ansprüche, dem eine Anzahl von Anschlussbolzen (25) eingebracht ist, wobei die beidendseitig angeordneten Lagerschilde (50), den Ständer (42) aufnehmend, über Zylinderschrauben (52) miteinander verschraubt sind, und wobei das Klemmbrett (1,1') in seiner in Längsrichtung (3) verlaufenden Durchgangsbohrung (11) von einer Zylinderschraube (52) durchsetzt ist und mit seiner Auflagefläche (7) dem Ständer (42), insbesondere unter Vorspannung, anliegt.

12. Elektrische Maschine nach Anspruch 11,
**dadurch gekennzeichnet,**
**dass** das Klemmbrett (1) gegenüber der Zylinderschraube (52) verschiebesicher mittels einer in die Gewindebohrung gegen die Zylinderschraube (52) eingeschraubte Klemmschraube (56) gehalten ist.

## Claims

1. Terminal board (1, 1') for a housing-free electrical machine, in particular for a housing-free asynchronous motor (40), having an electrically insulating base body (5) which extends in a longitudinal direction (3) and in a transverse direction (4) and comprises means for attachment to the electrical machine and means for fitting a number of connection pins (25), with the base body (5) having a bearing face (7) which is concavely curved in the transverse direction (4) and is substantially linear in the longitudinal direction (3),
**characterized**
**in that**, as means for attachment to the electrical machine, a passage hole (11), which runs in the longitudinal direction (3), is made in the base body (5) in order to be pushed onto a cylindrical screw for screw connection of the end plates which surround the stator.

2. Terminal board (1, 1') according to Claim 1,
**characterized**
**in that** the concave curvature of the bearing face (7) has different radii (22, 23) of curvature.

3. Terminal board (1, 1') according to Claim 1 or 2,
**characterized**
**in that** a threaded hole (67) which meets the passage hole (11) is made in the base body (5).

4. Terminal board (1, 1') according to one of the preceding claims,
**characterized**
**in that** the upper boundary face (8) of the base body (5), which upper boundary face is averted from the bearing face (7), is convexly curved in the transverse direction (4) and is substantially planar in the longitudinal direction (3).

5. Terminal board (1, 1') according to one of the preceding claims,
**characterized**
**in that** a force-fitting and/or interlocking rotation-prevention means is provided for fitting the or each connection pin (25).

6. Terminal board (1, 1') according to Claim 5,
**characterized**
**in that**, in order to hold the or each connection pin (25) in a rotationally fixed manner, a polygonal recess (17) is made in the bearing face (7) in each case, the said polygonal recess merging with a continuous cylindrical hole (9) in the base body (5) in the direction of the upper boundary face (8) so as to form a stop (18).

7. Terminal board (1, 1') according to one of the preceding claims,
**characterized**
**in that** the bearing face (7) is extended by a contact flank (13) in the transverse direction (4).

8. Terminal board (1, 1') according to one of the preceding claims,
**characterized**
**in that** the boundary faces (20) which laterally bound the base body (5) in the transverse direction (4) slope down obliquely towards the outside.

9. Terminal board (1, 1') according to one of the preceding claims,
**characterized**
**in that** it can be composed of a number of, in particular similar, individual modules (65) in the longitudinal direction (3).

10. Terminal board (1, 1') according to Claim 9,
**characterized**
**in that** each individual module (65) comprises the means for attachment to the electrical machine and the means for fitting a connection pin (25).

11. Electrical machine, in particular asynchronous motor (40), having a cylindrical stator (42) which extends along a longitudinal direction (3), having a moveably mounted rotor (47) in the interior of the stator (42), and having a drive shaft which is connected to the rotor (47) and extends in the longitudinal direction (3), with the drive shaft being mounted in end plates (50) which are arranged at either end of the stator (42) and are drawn out beyond the external dimensions of the stator (42),
**characterized by**
a terminal board (1, 1'), which rests against the stator (42) in the longitudinal direction (3), according to one of the preceding claims, a number of connection pins (25) being inserted into said terminal board, with the end plates (50) which are arranged at either end being screwed to one another by means of cylindrical screws (52) so as to hold the stator (42), and with a cylindrical screw (52) passing through the passage hole (11) which runs in the longitudinal direction (3) of the terminal board (1, 1'), and said terminal board resting, in particular with prestress, on the stator (42) by way of its bearing face (7).

12. Electrical machine according to Claim 11,
**characterized**
**in that** the terminal board (1) is held fixed in terms of linear movement in relation to the cylindrical screw (52) by means of a clamping screw (56) which is screwed into the threaded hole against the cylindrical screw (52).

## Revendications

1. Plaque à bornes (1, 1') pour une machine électrique sans carter, notamment pour un moteur asynchrone (40) sans carter, comprenant un corps de base (5) électriquement isolant, qui s'étend dans une direction longitudinale (3) et dans une direction transversale (4), et comporte des moyens pour la fixation à la machine électrique et des moyens pour le montage de boulons de connexion (25), le corps de base (5) présentant une surface d'appui (7), qui est d'une courbure concave dans la direction transversale (4) et est sensiblement rectiligne dans la direction longitudinale (3),
**caractérisée en ce qu'**en guise de moyen pour la fixation à la machine électrique, dans le corps de base (5) est réalisé un alésage de passage (11) s'étendant dans la direction longitudinale (3) et destiné à s'engager sur une vis cylindrique prévue pour l'assemblage par vissage des flasques de palier enserrant le stator.

2. Plaque à bornes (1, 1') selon la revendication 1,
**caractérisée en ce que** la courbure concave de la surface d'appui (7) présente différents rayons de courbure (22, 23).

3. Plaque à bornes (1, 1') selon la revendication 1 ou la revendication 2,
**caractérisée en ce que** dans le corps de base (5) est réalisé un alésage taraudé (67) débouchant dans l'alésage de passage (11).

4. Plaque à bornes (1, 1') selon l'une des revendications précédentes,
**caractérisée en ce que** la surface de délimitation supérieure (8) du corps de base (5), qui est opposée à la surface d'appui (7), est courbée de manière convexe dans la direction transversale (4) et est de configuration sensiblement plane dans la direction longitudinale (3).

5. Plaque à bornes (1, 1') selon l'une des revendications précédentes,
**caractérisée en ce que** pour le montage du ou de chaque boulon de connexion (25), il est prévu un système d'arrêt de rotation par adhérence et/ou par complémentarité de formes.

6. Plaque à bornes (1, 1') selon la revendication 5,
**caractérisée en ce que** pour recevoir de manière arrêtée en rotation le ou chaque boulon de connexion (25), dans la surface d'appui (7) est réalisé respectivement un évidement polygonal (17), qui dans le corps de base (5), en direction de la surface de délimitation supérieure (8), se raccorde à un alésage cylindrique (9) traversant, en formant une butée (18).

7. Plaque à bornes (1, 1') selon l'une des revendications précédentes,
**caractérisée en ce que** la surface d'appui (7) est prolongée dans la direction transversale (4), par un flanc d'appui (13).

8. Plaque à bornes (1, 1') selon l'une des revendications précédentes,
**caractérisée en ce que** les surfaces de délimitation (20) délimitant latéralement le corps de base (5) dans la direction transversale (4), sont d'une configuration inclinée descendante vers l'extérieur.

9. Plaque à bornes (1, 1') selon l'une des revendications précédentes,
**caractérisée en ce qu'**elle est réalisée à partir d'un certain nombre de modules individuels (65), notamment de même type, pouvant être assemblés dans la direction longitudinale (3).

10. Plaque à bornes (1, 1') selon la revendication 9,
**caractérisée en ce que** chaque module individuel (65) comprend le moyen pour la fixation à la machine électrique et le moyen pour le montage d'un boulon de connexion (25).

11. Machine électrique, notamment moteur asynchrone (40), comprenant un stator (42) de forme cylindrique, qui s'étend le long d'une direction longitudinale (3), comprenant également un rotor (47) monté mobile à l'intérieur du stator (42), et comprenant un arbre d'entraînement relié au rotor (47) et s'étendant dans la direction longitudinale (3), l'arbre d'entraînement étant monté en rotation dans des flasques de palier (50) agencés aux deux extrémités du stator (42) et s'étendant vers l'extérieur au-delà des dimensions extérieures du stator (42),
**caractérisée par** une plaque à bornes (1, 1') selon l'une des revendications précédentes, qui s'appuie sur le stator (42) dans la direction longitudinale (3), et dans laquelle sont montés un certain nombre de boulons de connexion (25), les flasques de palier (50), agencés aux deux extrémités, étant reliés mutuellement par l'intermédiaire de vis cylindriques (52) en enserrant entre eux le stator (42), et la plaque à bornes (1, 1') étant traversée par une vis cylindrique (52) dans son alésage de passage (11) qui s'étend dans la direction longitudinale (3), et s'appuyant, avec sa surface d'appui (7) contre le stator (42), notamment sous précontrainte.

12. Machine électrique selon la revendication 11,
**caractérisée en ce que** la plaque à bornes (1) est maintenue bloquée en coulissement par rapport à la vis cylindrique (52), au moyen d'une vis de serrage (56) vissée dans l'alésage taraudé contre la vis cylindrique (52).
